# EUROPEAN PATENT SPECIFICATION

(11) **EP 3 305 597 B1**
(45) Date of publication and mention of the grant of the patent: **09.12.2020**
(21) Application number: 16382455.0
(22) Date of filing: 04.10.2016
(51) Int. Cl.: B60R 1/00

(54) **VEHICLE DRIVING ASSIST SYSTEM**
FAHRZEUGFAHRASSISTENZSYSTEM
SYSTEME D'ASSISTANCE A LA CONDUITE DE VEHICULE

(43) Date of publication of application: 11.04.2018
(73) Proprietor: Ficomirrors, S.A.U., 08028 Barcelona (ES)
(72) Inventor: GÓMEZ TIMONEDA, David, 08232 VILADECAVALLS (Barcelona) (ES); LORIVAL, Frédéric, 08232 VILADECAVALLS (Barcelona) (ES); LÓPEZ GALERA, Robert, 08232 VILADECAVALLS (Barcelona) (ES); BIOSCA YUSTE, Oriol, 08232 VILADECAVALLS (Barcelona) (ES)
(74) Representative: Herrero & Asociados, S.L.

(56) References cited:
- EP-A1- 1 705 623
- EP-A1- 2 079 053
- EP-A2- 1 102 226
- WO-A1-2010/080610
- DE-A1-102014 016 566
- JP-A- 2004 142 741
- JP-A- 2006 051 850
- JP-U- S6 082 885
- US-B2- 7 940 193

## Description

### Field of the invention

The present invention has its application within the assistance devices for driving vehicles (cars, motorcycles, trucks, buses, etc.).

The present invention generally relates to design and construction of a driving assist system comprising cameras and display for use in vehicles to assist the driver in any steering operation, forward and reverse maneuvers.

### Background of the invention

Different drive support systems exist providing the vehicle driver with an image of a side rear/centered rear area of the vehicle captured by a camera. Image displayed from the cameras lacks depth because disappear the driver's vehicle reference, resulting in safety risk for the driver as it is not apparent how far from the vehicle's rear are the rear vehicles in forward driving or rear objects/vehicles in reverse driving. Traditional rear-view mirrors provide a reference for the driver as the image reflects also the rear window frame or the rear part of the vehicle (for side rear-view mirrors).

These rear vision devices enhance the rear field of view but the reference for the driver is lost. When driving forward, this lost reference causes the driver to hesitate whether the rear vehicle is far enough to perform the desired maneuver, such as a lane change. When reverse driving, this lost reference causes the driver to hesitate whether the approaching rear objects (static or dynamic) are close enough to collide against the vehicle. This situation is especially relevant when maneuvering for parking.

An example of parking assist device is disclosed in JP 2004-142741. This parking assist device draws guide lines of a vehicle width in a moving direction (a backward direction) of a vehicle and displays a ladder-shaped diagram, in a superimposed manner, in which the guide lines are connected at intervals of a predetermined distance. The device displays an anticipated traveling locus in a superimposed manner, for example, according to a steering angle detected by a steering sensor.

An example of supporting driving at the time of lane change is disclosed in JP 2006-51850, which describes a drive support apparatus that displays a guide line (a transverse line traversing a monitor), in a superimposed manner, at a boundary position of a dangerous area, a caution area, or a safety area on a road surface, decided based on distance or relative speed.

However, the existing drive support apparatuses have the following problems:
(1) In the device disclosed in JP 2004-142741, when it is applied to lane change during traveling, it is difficult to intuitively learn the distance from other vehicles by simply displaying the ladder-shaped diagram having a predetermined distance interval. For example, when a vehicle is present between a fifth compartment and a sixth compartment of the ladder shape display having an interval of 3 m, the driver needs to convert the distance, for example, 3 m (per vehicle)x4 (vehicles)=12 m. Further, since a distant vehicle that is at a predetermined distance or more from the rear end of the subject vehicle is hidden by the superimposed displayed diagram, it is difficult to recognize the presence of the vehicle.
(2) In the device disclosed in JP 2006-51850, in the side rear image captured at a wide angle, a lane passes in an oblique direction. Thus, it is difficult to understand a positional relationship between a vehicle and a guide line in the image through a guide line of a transverse straight line form, and it is difficult to intuitively learn the distance from other vehicles. Furthermore, this system solely works either with left/right turns or when the vehicle changes the road lane.

US 7940193 discloses an apparatus to assist a parking operation of a vehicle which captures an image of a backward view of the vehicle and displays in the captured image a guiding portion to guide the vehicle into a target parking space. The display of the apparatus, inside the vehicle, superimposes on the captured image two assisting lines: a first assist line arranged in the target parking space to be in parallel to a front-rear direction of the target parking space and a second assist line extending to a backward area of the vehicle to be in parallel to a front-rear direction of the vehicle. The first and second assist lines are possibly overlapped each other when a vehicle reverse movement with the turning movement is completed. The first assist line is displayed so as to be static on the screen with respect to the target parking space and in accordance with the turning movement of the vehicle. The second assist line is displayed so as to be static on the screen during the turning movement of the vehicle. Both static lines could disturb the driver's vision and be more an annoyance than a commodity. EP 1 705 623 A1 and EP 1 102 226 A2 disclose a system for assisting a driver according to the preamble of claim 1.

Therefore, it is highly desirable to provide a drive support system which allows the driver judge about the distance to other nearby vehicles or rear objects in a more intuitive, accurate and confortable way in forward and rearward driving maneuvers.

### Summary of the invention

The present invention solves the aforementioned problems and overcomes previously explained state-of-art work limitations by providing a system for assisting a driver with the features of claim 1.

In the case that the vehicle comprises a rear-view mirror, the display may be integrated within it, working as a mirror displaying the image from an external camera with a rear field of view, or being between a transflective element (either allows the reflection of a part of the light and/or allows the transmission of lights therethrough) and the rear cover. The transflective element, when works as a mirror, can cover a second field of view outside of the rear part of the vehicle, the second field of view being smaller than the aforementioned first field of view.

Another aspect of the present invention refers to a rear-view mirror of a vehicle for driving assistance which comprises:
- at least a transflective element and a rear cover, the transflective element covering a second field of view outside of the rear part of the vehicle,
- a display integrated in the rear-view mirror between the rear cover and the transflective element, the display being configurable for displaying an image of a first rear field of view of the rear part of the vehicle including ground level and captured by at least a first camera located at the vehicle, wherein the image to be displayed by the display is modified by processing means configured to overlay on said image at least a reference line which corresponds to a predetermined distance at ground level from the vehicle, according to the system of claim 1.

The proposed rear-view mirror can be configured in two working modes:
- a first working mode, wherein the display is off, the transflective element receives more light from outside than inside the rear-view mirror and the second field of view covered by the transflective element is shown in the rear-view mirror;
- a second working mode, wherein the display is on, the transflective element receives more light from the display, from inside than from outside the rear-view mirror and the first field of view displayed by the display is viewable through the transflective element.

In the defined second working mode, the rear-view mirror can show an image, displayed by the display, of a third field of view outside of the rear part of the vehicle including ground level and nearer to the vehicle than the first field of view, which is captured by a parking camera located in the rear part of the vehicle. Also, the rear-view mirror can show an image, displayed by the display, of a fourth field of view of the rear part of the vehicle captured by a third camera located in the driver side part of the vehicle (and oriented toward a rear area of said vehicle. Furthermore, the rear-view mirror can show an image, displayed by the display, of a fifth field of view of the rear part of the vehicle captured by a fourth camera located in the opposite-driver side part of the vehicle and oriented toward a rear area of said vehicle.

The image displayed by the display and shown by the rear-view mirror working in the second working mode can be modified, according to the direction of the movement of the vehicle, by processing means. In a possible embodiment, the rear-view mirror shows the first field of view, in the case of forward direction of the vehicle; and if rearward direction: i) the rear-view mirror can show the third field of view, replacing the first field of view by the third field of view, or ii) it can show both the first and the third fields of view. In another possible embodiment, if the vehicle is moving in a forward direction, the rear-view mirror can show the images of the first camera in a middle area of the rear-view mirror and the image of the third and fourth cameras adjacent to the middle area; if rearward direction, the rear-view mirror can show: i) the images of the parking camera in the middle area of the rear-view mirror and the image of the third and fourth camerasadjacent to the image of the parking camera, or ii) the images of the parking camera and first camera in the middle area of the rear-view mirror, one adjacent to the other or one inside to the other, and the image of the third and fourth cameras adjacent to the middle area.

The present invention has a number of advantages with respect to prior art, which can be summarized as follows:
- The use of overlaid horizontal reference lines during forward/rearward driving can be used as references, advises and alarms for the driver to be aware of the relative position of the vehicle with respect to other vehicles and obstacles, and allows the definition of a security distance. Moreover, the use of overlaid vertical reference lines to delimitate a predetermined width, e.g., the vehicle width, the width of road lanes, etc., also improves references of the vehicle.
- Furthermore, the use of the aforementioned overlays can be displayed depend on any action of the driver/vehicle (left/right turn, change of the road lane,...) or not (the driver can manually switch the overlaid display on/off and change the display of the overlays; also, the overlays on the display can automatically appear or disappear according to the system configuation).
- The driver can modify the number and other parameters of the overlays (as colours, distances, length, patterns, etc...) to customize the aid level that the driver wants to be provided with by the assistance system. This customization is also possible by the facilities for withdrawning or modifying the overlays position (distance reference), manually or automatically according to different parameters such as vehicle's speed, forward/rearward gear position, or distance with the rear car, to name but a few.
- In addition, the assistance system provides the option to include an overlay which is variable automatically according with safety requirements / tips.

These and other advantages will be apparent in the light of the detailed description of the invention.

### Description of the drawings

For the purpose of aiding the understanding of the characteristics of the invention, according to a preferred practical embodiment thereof and in order to complement this description, the following Figures are attached as an integral part thereof, having an illustrative and non-limiting character:
Figure 1 shows a schematic representation of a vehicle driving assist system for rear vision, according to a first embodiment of the invention.
Figure 2 shows a schematic representation of a vehicle driving assist system for rear vision, according to a second embodiment of the invention.
Figure 3 shows an exploded view of a rear-view mirror of the vehicle driving assist system, according to a possible embodiment of the invention.
Figure 4 shows a schematic representation of the vehicle using horizontal reference lines overlaid on the display, according to a possible embodiment of the invention.
Figure 5 shows a schematic representation of the vehicle using horizontal and vertical reference lines overlaid on the display, according to another possible embodiment of the invention.

### Preferred embodiment of the invention

The matters defined in this detailed description are provided to assist in a comprehensive understanding of the invention. Accordingly, those of ordinary skill in the art will recognize that variation changes and modifications of the embodiments described herein can be made without departing from the scope and spirit of the invention. Also, description of well-known functions and elements are omitted for clarity and conciseness.

Of course, the embodiments of the invention can be implemented in a variety of architectural platforms, operating and server systems, devices, systems, or applications. Any particular architectural layout or implementation presented herein is provided for purposes of illustration and comprehension only and is not intended to limit aspects of the invention.

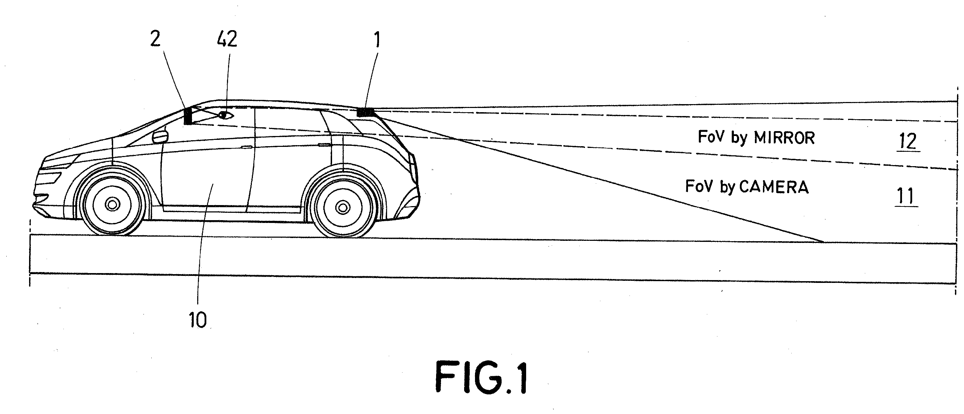

Figure 1 presents a vehicle (10) with a driving assist system for rear vision, according to a first preferred embodiment of the invention, which comprises:
- At least a first camera (1) located in a rear part of the vehicle (10) and oriented toward a rear area of said vehicle (10) such that it captures a first field of view (11) of the vehicle rear.
- A display (2), which can be located within an interior rear-view mirror (21) which is configured to display a rear view field which depends on the working mode. The rear-view mirror (21)can be configured in two working modes:
   i. in a first mode, "display off", the rear-view mirror (21) is working as a mirror reflecting a second rear field of view (12) through a transflective element (22), i.e., a mirror which reflects and transmits part of the light, the transflection characteristics being fix or variable and adjustable through voltage. The transflective element (22) receives more light from the outside than the display (2) and therefore the image reflected is viewable by the driver through the transflective element (22).
   ii. in a second mode, "display on", the rear-view mirror (21)is working as a display configured to display the first rear field of view (11) captured by the first camera (1) through the transflective element (22). When the display (2) is placed in the interior rear-view mirror (21), the rear image displayed by said display (2) replaces the rear image reflected by the transflective element (22) as it has substantially the same focal distance as the driver when looking at objects through the rear-view mirror (21) from the driver's ocular point (42). The transflective element (22) receives more light from the the display (2) than the outside and therefore the driver sees the image displayed by the display (2) through said transflective element (22).

The image displayed by the display (2) covering the first rear field of view (11) is larger than the second rear field of view (12) image reflected by the transflective element (22) of the rear-view mirror (21).

In a variation of this embodiment, the display (2) may be out of the interior rear-view mirror (21) and displays the first rear field of view (11) captured by first camera (1) when the display (2) is "on".

Another variation of this preferred first embodiment comprises:
- At least a third camera located in the driver-side part of the vehicle (10) and oriented toward a rear area of said vehicle (10) such that it captures a fourth field of view of the vehicle rear, this camera may be integrated in the same driver-side rear-view mirror or replace said driver-side rear-view mirror.
- A display (2), which can be located within either an interior rear-view mirror (21), or dashboard, driver lateral door, windshield, driver-door window, etc., and is configured to display that fourth field of view.

An improvement of this variation is that the embodiment also comprises:
- A fourth camera located in the opposite-driver side part of the vehicle (10) and oriented toward a rear area of said vehicle (10) such that it captures a fifth field of view of the vehicle rear, this camera may be integrated in the same opposite-driver side rear-view mirror or replace said opposite-driver side rear-view mirror.
- A display (2), which can be located within either an interior rear-view mirror (21), or dashboard, opposite-driver lateral door, windshield, opposite-driver door window, etc., and is configured to display that fifth field of view.

In addition, the driving assist system further comprises:
- A controller with image processor which modifies the image received by the camera (1), adding when it is necessary reference overlays, and modifies the image to be displayed by the display (2). The controller may have data input means, e.g., a user interface, to allow the user change parameters of the overlays. Also, the user may input data by means of the steering wheel levers to modify manually the overlays. The controller may be located at the same ubication of the display (2), inside or outside the interior rear-view mirror (21) and even could be a controller located in other places and used for controlling other parameters too.

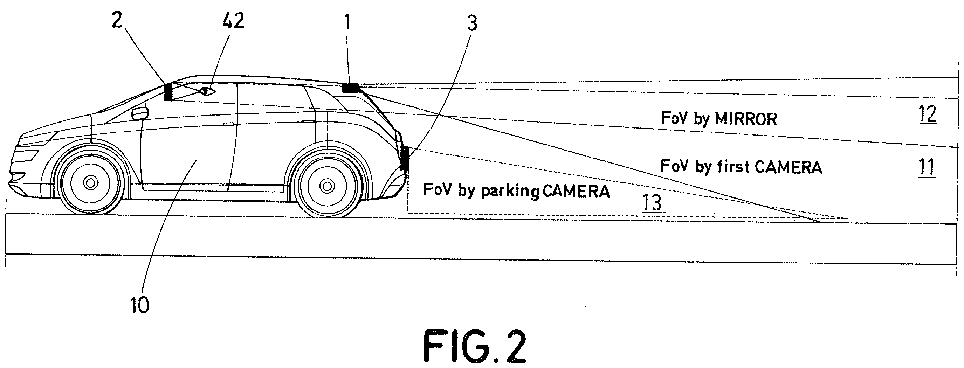

Figure 2 shows a second embodiment of a driving assist system for rear vision in a vehicle (10) which comprises:
- At least a first camera (1) located in a rear part of the vehicle (10) and oriented toward a rear area of said vehicle (10) such that it captures a first field of view (11) of the vehicle rear.
- At least a parking camera (3) located in a rear part of the vehicle (10) and oriented toward the rear area of said vehicle (10) such that it captures a third field of view (13) of the vehicle rear next to the vehicle (10).
- A rear-view mirror (21), integrating a display (2), with two different working modes, a first mode, the rear-view mirror (21) working as a mirror, reflecting a rear second field of view (12) through a transflective element (22); and a second mode, the rear-view mirror (21) working as a display, configured to display the rear field of view captured by the first camera (1) through the transflective element (22). This rear image is displayed by the display (2) integrated in the rear-view mirror (21) and replaces the rear image reflected by the transflective element (22) of said rear-view mirror (21).

In this second embodiment, when the the rear-view mirror (21) works displaying the images captured by the cameras (1, 3), the display (2) displays the image from the first camera (1) or the parking camera (3) depending on at least two different parameters:
- Gear shift position → for example, if the gear shift position is in reverse shift position, the display (2) displays the image captured by tha parking camera (3); and if the gear shift position is out of the reverse shift position, the display (2) displays the image captured by the first camera (1).
- Direction of movement → for example, if the vehicle (10) is in rearward movement, the display (2) displays the image captured by the parking camera (3), and if the vehicle (10) is not in rearward movement, the display (2) displays the image captured by the first camera (1).

Finally, an other option of displaying is that the display (2) always displays the image of the first camera (1) and when the system detects that images from the parking camera (3) have to be displayed, the display (2) displays both images, one adjacent to the other or one inside the other.

A variation of this second embodiment is adding one or both side cameras to the system.

Then the display could works of the following ways:
- During forward driving, the display (2) shows the images of the first camera (1) in the middle and the image of every side camera adjacent to the middle image, or the display (2) only shows the images of the first camera (1), and in a change of road lane or activating a turn signal the display shows the image of the first camera (1) and adjacent the image of the side camera where the vehicle (10) moves.
- During backward driving, the display (2) shows the images of the parking camera (3) in the middle and the image of every side camera adjacent to the parking camera image, or the display (2) shows the images of the parking camera (3) and first camera in the middle, one adjacent to the other or one inside to the other, and the image of every side camera adjacent to the middle image.

In this second embodiment, the system further comprises a controller with image processor to modify the image received by the cameras (1, 3), adding when it is necessary the overlays on the images from both the cameras (1, 3), and in order to modify the image to be displayed by the display (2) according to the direction of the movement: if forward, the image from the first camera (1) is displayed; if rearward, the image from the parking camera (3) is displayed. This controller may also have means for inputing data, in the display (2), steering wheel levers, etc., by a user to modify parameters of the overlays: color, patterns, length in which the overlaid reference line is displayed and/or the predetermined distance to which said reference line corresponds. The controller may be located at the same ubication of the display (2), inside or outside the rear-view mirror (21) and even could be a controller located in other places and used for controlling other parameters too.

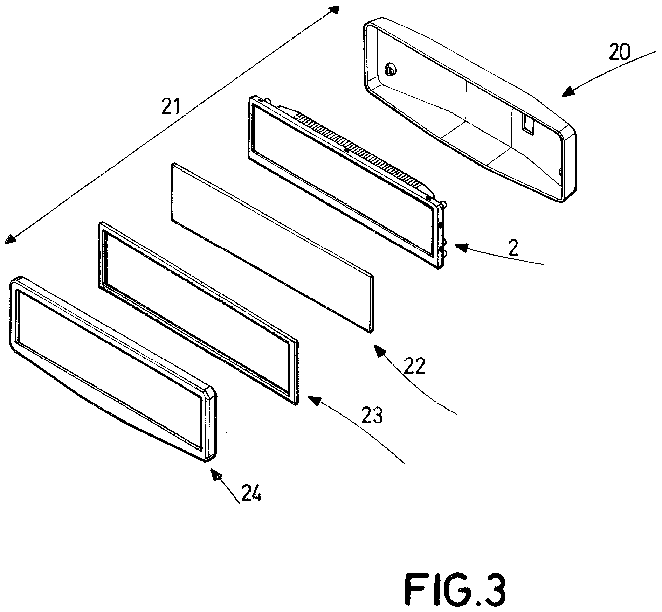

As shown in Figure 3, the display (2), e.g., a LED display, can be located behind a transflective element (22), . Figure 3 shows the display (2) located in a rear-view mirror (21) which comprises:
- A housing having a rear cover (20) and a front pannel or frame (24).
- A display (2) and a transflective element (22) that either allows the reflection of a part of the light and/or allows the transmission of lights therethrough. This transflective element (22) is generally known as half mirror or one-way mirror, mounted on the display (2), in front of the display (2), and fit together between the rear cover (20) and front frame (24) by means of a rubber pad (23). The transflective element (22) may be either a passive half mirror, with fixed characteristics of transmittance ant reflectance, or an active mirror that may modify through an electric voltage its characteristics of transmittance or/and reflectance. For example, the transflective element (22) may be an ordinary mirror, coated on its back surface with a thin layer of metal, usually silver or aluminum, such that reflects some light and is penetrated by the rest. Also, may be used different types of mirror elements, with electro-optic elements having variable transmittance and/or reflectance adjustable through variable voltage. Also, the display (2) may be installed directly in the vehicle (10) out of the rear-view mirror (21), such as, dashboard, lateral doors, windshield, internal rear-view mirror, lateral-door windows, etc.

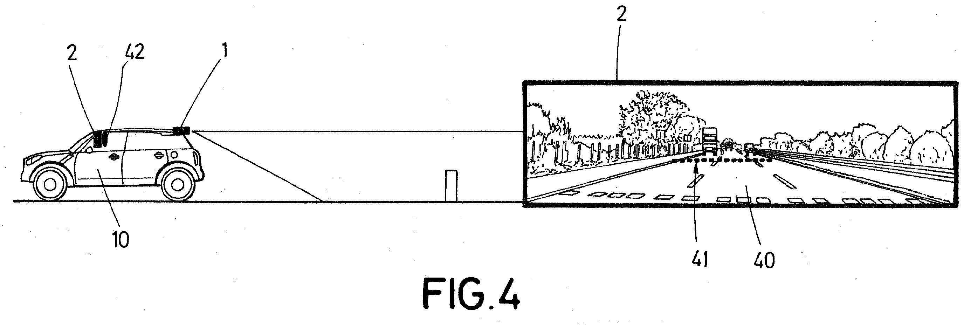

Figure 4 shows a possible embodiment of the invention which comes to solve the lost of references when driving forward, for example when the driver maneauvers to change the lane. At the top of the image displayed by the display (2) a first horizontal reference line (41), for example displayed in a first colour, e.g., blue, is represented to provide the driver a reference that can aid to interpret the relative position of the rear vehicles. This first horizontal reference line (41) is set at a predetermined position which corresponds to a first predetermined distance at ground level (40), e,g., 50m, from the driver's ocular point (42) or from the rear part of the vehicle (10). This distance and its measurement are configurable.

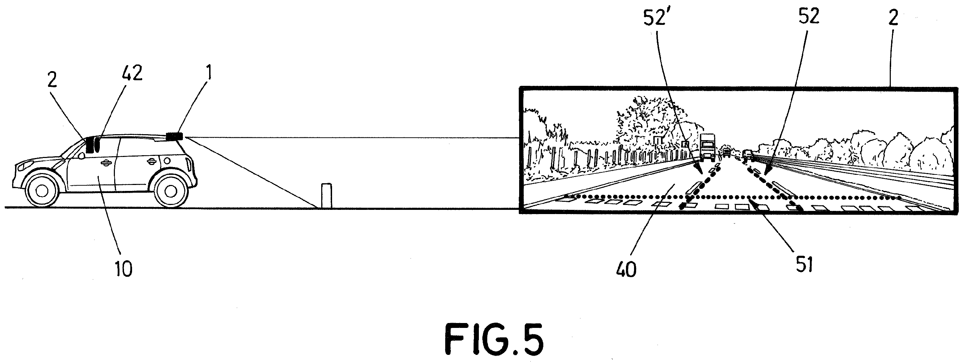

Figure 5 shows an improvement of the above-described embodiment presented in Figure 4. At the top of the image displayed by the display (2) a second horizontal reference line (51) is represented to provide the driver with a reference that can aid to interpret the relative position of the approaching rear objects.

Additionally, to aid for driving forward, the display (2) also overlays two vertical oblique lines (52, 52'), e.g., displayed in other colour different from the colour of the horizontal line (51), to provide the driver with a reference of the vehicle's width or even the road/road lane width to aid to interpret the lateral relative position of the approaching rear vehicles.

Since the use of these reference lines (41, 51, 52, 52') could become more an annoyance than a commodity inside of the city, where the speed of the vehicles is limited, or in a traffic jam of a highway, when the driving speed is also low and we can have a rear or next vehicle very close, closer that the beginning of the first field of view (11), an indicative of the need of any of these reference lines (41, 51, 52, 52') is configured and based on a range of speed and/or the distance between the vehicle and the rear vehicle. Therefore, according to the invention, the system further comprises processing means, e.g., a controller, for activating and deactivating the reference lines (41, 51, 52, 52') by the display (2) depending on a threshold of driving speed and/or the distance between the vehicle and the rear vehicle, which is probed by a sensor provided in the vehicle (10). Moreover, when driving at high speed, the predetermined distance at ground level (40) of the first horizontal reference line (41), and of the second horizontal reference line (51) if the latter is also used, should be modified to set a larger predetermined distance for security. Optionally, the driver can change manually some other characteristics of the reference lines (41, 51, 52, 52'), such as adding lines, modifying the color, patterns, length in which the line is displayed, in addition to changing the predetermined distance to which said reference line corresponds as described before. For this purpose, the system further comprises data input means in the steering wheel levers, on the display, on the housing of the display or the rear-view mirror, etc., to allow the driver modify the characteristics of the overlays of the images from any of the cameras (1, 3).

Note that in this text, the term "comprises" and its derivations (such as "comprising", etc.) should not be understood in an excluding sense, that is, these terms should not be interpreted as excluding the possibility that what is described and defined may include further elements, steps, etc.

## Claims

1. A system for assisting a driver in driving a vehicle (10), comprising:
- at least a first camera (1) for capturing a first field of view (11) outside of the rear part of the vehicle (10) and including ground level (40),
- a display (2) configurable for displaying an image of the first rear field of view (11) captured by the, at least one, first camera (1);
- processing means configured to:
- modify the image to be displayed by the display (2);
- overlay on the image displayed by the display (2) at least one reference line (41, 51, 52, 52') which corresponds to a predetermined distance at ground level (40) from the vehicle (10);
- activate automatically the overlay of the, at least one, reference line (41, 51, 52, 52') to be displayed by the display (2) based on the speed of the vehicle (10) or the distance with a rear object;
**characterized in that** the processing means are further configured to deactivate automatically the overlay of the reference lines (41, 51, 52, 52') previously activated and displayed by the display (2), the deactivation being based on a first threshold of driving speed and/or a second threshold of the distance between the vehicle (10) and the rear object, and the deactivation being performed by the processing means when the speed of the vehicle (10) is below the first threshold of driving speed and/or when the rear object is closer to the vehicle (10) than the beginning of the first field of view (11).

2. The system according to any preceding claim, further comprising at least a parking camera (3) located in the rear part of the vehicle (10) for capturing a third field of view (13) outside of the rear part of the vehicle (10) including ground level (40) and nearer to the vehicle (10) than the first field of view (11).

3. The system according to claim 2, wherein the processing means modify the image to be displayed by the display (2) according to a direction of the movement:
- if forward direction, the first field of view (11) is displayed;
- if rearward direction, the third field of view (13) is displayed, the display (2) replacing the first field of view (11) by the third field of view (13) or displaying both the first field of view (11) and the third field of view (13).

4. The system according to any preceding claim, further comprising at least a third camera located in the driver side part of the vehicle (10) and oriented toward a rear area of said vehicle (10) for capturing a fourth field of view of the rear part of the vehicle (10) and wherein the display (2) is configured to display the fourth field of view.

5. The system according to claim 4, wherein the third camera is integrated in a driver side rear-view mirror of the vehicle (10).

6. The system according to any preceding claim, further comprising at least a fourth camera located in the opposite-driver side part of the vehicle (10) and oriented toward a rear area of said vehicle (10) for capturing a fifth field of view of the rear part of the vehicle (10) and wherein the display (2) is configured to display the fifth field of view.

7. The system according to claim 6, wherein the fourth camera is integrated in an opposite-driver side rear-view mirror of the vehicle (10).

8. The system according to claims 2-7, wherein:
- during forward driving of the vehicle (10), the display (2) shows the images of the first camera (1) in a middle area and the image of the third and fourth cameras adjacent to the middle area, or the display (2) only shows the images of the first camera (1), and in a change of road lane or activating a turn signal the display (2) shows the image of the first camera (1) and adjacently the image of the side camera where the vehicle (10) moves;
- during backward driving of the vehicle (10), the display (2) shows the images of the parking camera (3) in the middle area and the image of the third and fourth cameras adjacent to the image of the parking camera (3), or the display (2) shows the images of the parking camera (3) and first camera (1) in the middle area, one adjacent to the other or one inside to the other, and the image of the third and fourth camerasadjacent to the middle image.

9. The system according to any preceding claim, wherein the processing means are configured to overlay on the image displayed by the display (2) a first horizontal reference line (41) corresponding to a first predetermined distance when driving forward and a second horizontal reference line (51) corresponding to a second predetermined distance when driving backward.

10. The system according to any preceding claim, wherein the processing means are configured to overlay on the image displayed by the display (2) at least two vertical oblique reference lines (52, 52') and the distance between the two vertical oblique reference lines (52, 52') corresponding to a predetermined width.

11. The system according to any preceding claim, wherein the display (2) displays the, at least one, reference line (41, 51, 52, 52') according to a parameter which is configurable by the driver, the parameter being selected from color of the line (41, 51, 52, 52'), pattern of the line (41, 51, 52, 52'), length in which the line (41, 51, 52, 52') is displayed in the display (2) and the predetermined distance which the reference line (41, 51, 52, 52') corresponds to.

12. The system according to claim 11, further comprising data input means for the driver to modify the parameter of the, at least one, reference line (41, 51, 52, 52'), the data input means being located in steering wheel levers of the vehicle (10), on the display (2), or on a rear-view mirror (21).

13. The system according to any preceding claim, further comprising a rear-view mirror (21) comprising at least a transflective element (22) and a rear cover (20), the transflective element (22) covers a second field of view (12) outside of the rear part of the vehicle (10), the second field of view (12) being smaller than the first field of view (11), and wherein the display (2) is integrated in the rear-view mirror (21) between the rear cover (20) and the transflective element (22).

14. The system according to any of claims 1-12, wherein the display (2) is at a location in the vehicle selected from dashboard, driver lateral door, opposite-driver lateral door, windshield, driver-door window and opposite-driver lateral window.

## Patentansprüche

1. System zum Unterstützen eines Fahrers beim Fahren eines Fahrzeugs (10), umfassend:
- mindestens eine erste Kamera (1) zum Erfassen eines ersten Sichtfeldes (11) außerhalb eines hinteren Teils des Fahrzeugs (10) und einschließlich der Bodenebene (40),
- eine Anzeige (2), die zum Anzeigen eines Bildes des ersten Sichtfeldes (11) konfigurierbar ist, das durch die mindestens eine erste Kamera (1) erfasst wird;
- Verarbeitungsmittel, konfiguriert zum:
- Modifizieren des Bildes, das von der Anzeige (2) anzuzeigen ist;
- Überlagern über dem von der Anzeige (2) angezeigten Bild mindestens einer Referenzlinie (41, 51, 52, 52'), die einem vorbestimmten Abstand auf Bodenebene (40) von dem Fahrzeug (10) entspricht;
- automatisches Aktivieren der Überlagerung der mindestens einen Referenzlinie (41, 51, 52, 52'), die auf der Anzeige (2) basierend auf der Geschwindigkeit des Fahrzeugs (10) oder dem Abstand mit einem hinteren Objekt anzuzeigen ist;
**dadurch gekennzeichnet, dass** die Verarbeitungsmittel ferner zum automatischen Deaktivieren der Überlagerung der Referenzlinien (41, 51, 52, 52'), die zuvor aktiviert waren und von der Anzeige (2) angezeigt wurden, konfiguriert sind, wobei die Aktivierung auf einem ersten Schwellenwert der Fahrgeschwindigkeit und/oder einem zweiten Schwellenwert des Abstands zwischen dem Fahrzeug (10) und dem hinteren Objekt basiert, und die Deaktivierung durch das Verarbeitungsmittel durchgeführt wird, wenn die Geschwindigkeit des Fahrzeugs (10) unterhalb des ersten Schwellenwerts der Fahrgeschwindigkeit und/oder wenn ein hinteres Objekt näher des Fahrzeugs (10) als der Beginn des Sichtfeldes (11) sind.

2. System nach einem der vorhergehenden Ansprüche, ferner umfassend mindestens eine Parkkamera (3), die im hinteren Teil des Fahrzeugs (10), um ein drittes Sichtfeld (13) außerhalb des hinteren Teils des Fahrzeugs (10) einschließlich Bodenebene (40) zu erfassen, und näher des Fahrzeugs (10) als das erste Sichtfeld (11) angeordnet ist.

3. System nach Anspruch 2, wobei die Verarbeitungsmittel das Bild, das von der Anzeige (2) anzuzeigen ist, gemäß einer Bewegungsrichtung modifizieren:
- falls in Vorwärtsrichtung, das erste Sichtfeld (11) angezeigt wird;
- falls in Rückwärtsrichtung, das dritte Sichtfeld (13) angezeigt wird, wobei die Anzeige (2) das erste Sichtfeld (11) durch das dritte Sichtfeld (13) ersetzt oder sowohl das erste Sichtfeld (11) als auch das dritte Sichtfeld (13) anzeigt.

4. System nach einem der vorhergehenden Ansprüche, ferner umfassend mindestens eine dritte Kamera, die in dem Fahrerseitenteil des Fahrzeugs (10) angeordnet und in Richtung eines hinteren Bereichs des Fahrzeugs (10) zum Erfassen eines vierten Sichtfeldes des hinteren Teils des Fahrzeugs (10) ausgerichtet ist, und wobei die Anzeige (2) zum Anzeigen des vierten Sichtfeldes konfiguriert ist.

5. System nach Anspruch 4, wobei die dritte Kamera in einem fahrerseitigen Rückspiegel des Fahrzeugs (10) integriert ist.

6. System nach einem der vorhergehenden Ansprüche, ferner umfassend mindestens eine vierte Kamera, die in dem der Fahrerseite gegenüberliegenden Seitenteil des Fahrzeugs (10) angeordnet und in Richtung eines hinteren Bereichs des Fahrzeugs (10) zum Erfassen eines fünften Sichtfeldes des hinteren Teils des Fahrzeugs (10) ausgerichtet ist, und wobei die Anzeige (2) zum Anzeigen des fünften Sichtfeldes konfiguriert ist.

7. System nach Anspruch 6, wobei die vierte Kamera in einem der Fahrerseite gegenüberliegenden Rückspiegel des Fahrzeugs (10) integriert ist.

8. System nach einem der Ansprüche 2 bis 7, wobei:
- während des Fahrens des Fahrzeugs (10) die Anzeige (2) die Bilder der ersten Kamera (1) in einem Mittelbereich und das Bild der dritten und vierten Kamera benachbart des Mittelbereichs zeigt, oder die Anzeige (2) nur die Bilder der ersten Kamera (1) zeigt und bei einem Spurwechsel oder Aktivieren eines Blinksignals die Anzeige (2) das Bild der ersten Kamera (1) und benachbart das Bild der Seitenkamera anzeigt, in der sich das Fahrzeug (10) bewegt;
- während des Rückwärtsfahrens des Fahrzeugs (10) die Anzeige (2) die Bilder der Parkkamera (3) im Mittelbereich zeigt und das Bild der dritten und vierten Kamera benachbart des Bildes der Parkkamera (3), oder die Anzeige (2) die Bilder der Parkkamera (3) und der ersten Kamera (1) im Mittelbereich zeigt, eines benachbart zum anderen oder eines innerhalb des anderen, und das Bild der dritten und vierten Kamera benachbart des mittleren Bildes.

9. System nach einem der vorhergehenden Ansprüche, wobei die Verarbeitungsmittel zum Überlagern über das Bild, das von der Anzeige (2) angezeigt wird, einer ersten horizontalen Referenzlinie (41) konfiguriert sind, die einem ersten vorbestimmten Abstand beim Vorwärtsfahren entspricht, und einer zweiten horizontalen Referenzlinie (51), die einem zweiten vorbestimmten Abstand beim Rückwärtsfahren entspricht.

10. System nach einem der vorhergehenden Ansprüche, wobei die Verarbeitungsmittel zum Überlagern über das Bild, das von der Anzeige (2) angezeigt wird, mindestens zwei vertikaler schräger Referenzlinien (52, 52') und den Abstand zwischen den vertikalen schrägen Linien (52, 52'), die einer vorbestimmten Breite entsprechen, konfiguriert sind.

11. System nach einem der vorhergehenden Ansprüche, wobei die Anzeige (2) die mindestens eine Referenzlinie (41, 51, 52, 52') gemäß einem Parameter anzeigt, der durch den Fahrer konfigurierbar ist, wobei der Parameter ausgewählt ist aus Farbe der Linie (41, 51, 52, 52'), Muster der Linie (41, 51, 52, 52'), Länge, in der die Linie (41, 51, 52, 52') in der Anzeige (2) angezeigt wird, und vorbestimmten Abstand, dem die Referenzlinie (41, 51, 52, 52') entspricht.

12. System nach Anspruch 11, ferner umfassend Dateneingabemittel für den Fahrer zum Modifizieren der Parameter der mindestens einen Referenzlinie (41, 51, 52, 52'), wobei die Dateneingabemittel in den Lenkradhebeln des Fahrzeugs (10) auf der Anzeige (2) oder auf einem Rückspiegel (21) angeordnet sind.

13. System nach einem der vorhergehenden Ansprüche, ferner umfassend einen Rückspiegel (21), umfassend mindestens ein transflektives Element (22) und eine hintere Abdeckung (20), wobei das transflektive Element (22) ein zweites Sichtfeld (12) außerhalb des hinteren Teils des Fahrzeugs (10) bedeckt, wobei das zweite Sichtfeld (12) kleiner als das erste Sichtfeld (11) ist und wobei die Anzeige (2) in dem Rückspiegel (21) zwischen der hinteren Abdeckung (20) und dem transflektiven Element (22) integriert ist.

14. System nach einem der Ansprüche 1 bis 12, wobei die Anzeige (2) an einem Ort in dem Fahrzeug ist, die ausgewählt ist aus Armaturenbrett, Fahrerseitentür, der Fahrerseite gegenüberliegenden Tür, Windschutzscheibe, Fahrertürfenster und dem der Fahrerseite gegenüberliegenden Fenster.

## Revendications

1. Système pour assister un conducteur dans la conduite d'un véhicule (10), comprenant :
- au moins une première caméra (1) pour capturer un premier champ de vision (11) en dehors de la partie arrière du véhicule (10) et incluant le niveau du sol (40),
- un écran (2) configurable pour afficher une image du premier champ de vision arrière (11) capturée par la, au moins une, première caméra (1) ;
- des moyens de traitement configurés pour :
- modifier l'image à afficher par l'écran (2) ;
- superposer sur l'image affichée par l'écran (2) au moins une ligne de référence (41, 51, 52, 52') qui correspond à une distance prédéterminée au niveau du sol (40) du véhicule (10) ;
- activer automatiquement la superposition de la, au moins une, ligne de référence (41, 51, 52, 52') à afficher par l'écran (2) sur la base de la vitesse du véhicule (10) ou de la distance avec un objet arrière ;
**caractérisé en ce que** les moyens de traitement sont en outre configurés pour désactiver automatiquement la superposition des lignes de référence (41, 51, 52, 52 ') précédemment activées et affichées par l'écran (2), la désactivation étant basée sur un premier seuil de vitesse de conduite et/ou un deuxième seuil de la distance entre le véhicule (10) et l'objet arrière, et la désactivation étant effectuée par les moyens de traitement lorsque la vitesse du véhicule (10) est en dessous du premier seuil de vitesse de conduite et/ou lorsque l'objet arrière est plus proche du véhicule (10) que le début du premier champ de vision (11).

2. Système selon l'une quelconque des revendications précédentes, comprenant en outre au moins une caméra de stationnement (3) située dans la partie arrière du véhicule (10) pour capter un troisième champ de vision (13) en dehors de la partie arrière du véhicule (10) incluant le niveau du sol (40) et plus près du véhicule (10) que le premier champ de vision (11).

3. Système selon la revendication 2, dans lequel les moyens de traitement modifient l'image à afficher par l'écran (2) selon un sens du mouvement :
- si vers l'avant, le premier champ de vision (11) est affiché ;
- si vers l'arrière, le troisième champ de vision (13) est affiché, l'écran (2) remplaçant le premier champ de vision (11) par le troisième champ de vision (13) ou affichant à la fois le premier champ de vision (11) et le troisième champ de vision (13).

4. Système selon l'une quelconque des revendications précédentes, comprenant en outre au moins une troisième caméra située dans la partie côté conducteur du véhicule (10) et orientée vers une zone arrière dudit véhicule (10) pour capturer un quatrième champ de vision de la partie arrière du véhicule (10) et dans lequel l'écran (2) est configuré pour afficher le quatrième champ de vision.

5. Système selon la revendication 4, dans lequel la troisième caméra est intégrée dans un rétroviseur côté conducteur du véhicule (10).

6. Système selon l'une quelconque des revendications précédentes, comprenant en outre au moins une quatrième caméra située dans la partie opposée au côté conducteur du véhicule (10) et orientée vers une zone arrière dudit véhicule (10) pour capturer un cinquième champ de vision de la partie arrière du véhicule (10) et dans lequel l'écran (2) est configuré pour afficher le cinquième champ de vision.

7. Système selon la revendication 6, dans lequel la quatrième caméra est intégrée dans un rétroviseur opposé au côté conducteur du véhicule (10).

8. Système selon les revendications 2 à 7, dans lequel :
- pendant la marche avant du véhicule (10), l'écran (2) montre les images de la première caméra (1) dans une zone centrale et l'image des troisième et quatrième caméras adjacente à la zone centrale, ou l'écran (2) ne montre que les images de la première caméra (1)), et lors d'un changement de voie ou d'une activation d'un clignotant, l'écran (2) montre l'image de la première caméra (1) et de manière adjacente l'image de la caméra latérale où se déplace le véhicule (10) ;
- pendant la marche arrière du véhicule (10), l'écran (2) montre les images de la caméra de stationnement (3) dans la zone centrale et l'image des troisième et quatrième caméras adjacente à l'image de la caméra de stationnement (3), ou l'écran (2) montre les images de la caméra de stationnement (3) et de la première caméra (1) dans la zone centrale, l'une adjacente à l'autre ou l'une à l'intérieur de l'autre, et l'image des troisième et quatrième caméras adjacente à l'image du milieu.

9. Système selon l'une quelconque des revendications précédentes, dans lequel les moyens de traitement sont configurés pour superposer sur l'image affichée par l'écran (2) une première ligne de référence horizontale (41) correspondant à une première distance prédéterminée lors de la marche avant et une deuxième ligne de référence horizontale (51) correspondant à une deuxième distance prédéterminée en marche arrière.

10. Système selon l'une quelconque des revendications précédentes, dans lequel les moyens de traitement sont configurés pour superposer sur l'image affichée par l'écran (2) au moins deux lignes de référence obliques verticales (52, 52') et la distance entre les deux lignes de référence obliques verticales (52, 52') correspondant à une largeur prédéterminée.

11. Système selon l'une quelconque des revendications précédentes, dans lequel l'écran (2) affiche la, au moins une, ligne de référence (41, 51, 52, 52 ') selon un paramètre qui est configurable par le conducteur, le paramètre étant choisi entre la couleur de la ligne (41, 51, 52, 52'), le motif de la ligne (41, 51, 52, 52'), la longueur dans laquelle la ligne (41, 51, 52, 52') est affichée sur l'écran (2) et la distance prédéterminée à laquelle la ligne de référence (41, 51, 52, 52') correspond.

12. Système selon la revendication 11, comprenant en outre des moyens de saisie de données pour que le conducteur modifie le paramètre de la, au moins une, ligne de référence (41, 51, 52, 52'), les moyens de saisie de données étant situés dans des leviers de volant du véhicule (10), sur l'écran (2), ou sur un rétroviseur (21).

13. Système selon l'une quelconque des revendications précédentes, comprenant en outre un rétroviseur (21) comprenant au moins un élément transflectif (22) et un cache arrière (20), l'élément transflectif (22) couvre un deuxième champ de vision (12) en dehors de la partie arrière du véhicule (10), le deuxième champ de vision (12) étant plus petit que le premier champ de vision (11), et dans lequel l'écran (2) est intégré dans le rétroviseur (21) entre le cache arrière (20) et l'élément transflectif (22).

14. Système selon l'une quelconque des revendications 1 à 12, dans lequel l'écran (2) est à un emplacement dans le véhicule choisi entre le tableau de bord, la porte latérale conducteur, la porte latérale opposée au conducteur, le pare-brise, la fenêtre de la porte conducteur et la fenêtre latérale opposée au conducteur.
